# EUROPEAN PATENT APPLICATION

(11) **EP 4 847 804 A1**
(43) Date of publication of application: **02.12.2026**
(21) Application number: 24919748.4
(22) Date of filing: 18.09.2024
(51) Int. Cl.: F16H 61/12, B60W 20/00

(54) **GEAR SHIFTING CONTROL METHOD AND SYSTEM FOR HYBRID POWER SYSTEM, AND ELECTRONIC DEVICE**

(30) Priority: 26.01.2024 CN 202410116494
(71) Applicant: Dongfeng Motor Group Co., Ltd., Wuhan, Hubei 430056 (CN)
(72) Inventor: WANG, Dewei, Wuhan, Hubei 430056 (CN); GUO, Zhenge, Wuhan, Hubei 430056 (CN); WANG, Jianglin, Wuhan, Hubei 430056 (CN); ZHOU, Li, Wuhan, Hubei 430056 (CN); MENG, Bin, Wuhan, Hubei 430056 (CN)
(74) Representative: Valet Patent Services Limited
(86) International application number: PCT/CN2024/119474
(87) International publication number: WO 2025/156668

(57) **Abstract**

Disclosed are a gear shifting control method and system for a hybrid power system, and an electronic device. The gear shifting control method includes: after a vehicle is powered on, continuously acquiring a rotating speed difference of a synchronizer of a hybrid power system; determining whether a duration during which the rotating speed difference of the synchronizer exceeds a preset rotating speed difference threshold is greater than a preset time period; and if the duration during which the rotating speed difference of the synchronizer exceeds the preset rotating speed difference threshold is greater than the preset time period, reporting a gear disengagement fault and performing a gear disengagement degradation protection.

## Description

### CROSS-REFERENCE TO RELATED APPLICATIONS

This application claims priority to Chinese Patent Application No. 202410116494.3, filed on January 26, 2024. The aforementioned application is hereby incorporated by reference in its entirety.

### TECHNICAL FIELD

The present invention relates to the field of automobiles technologies, and in particular, to a gear shifting control method and system for a hybrid power system, and an electronic device.

### BACKGROUND

Most automatic transmissions and new energy transmissions adopt a synchronizer as a gear shifting actuating mechanism. A synchronous engagement mechanism performs corresponding actions to engage a synchronizer of the synchronous engagement mechanism with a corresponding gear of a gear position. A structure of the synchronizer for gear shifting has a probability of gear shifting jamming, especially in a new energy gearbox, the inertia of a motor rotor is much greater than the inertia of a gearbox shaft system, thereby increasing a difficulty of synchronization for the synchronizer. For example, a tooth-to-tooth abutment or a synchronizer ring lock-up condition may occur during a gear shifting process, resulting in gear shifting failure.

Under a condition of deformation of a gear shifting system, there may be a situation where the synchronizer is not shifted in place while a gear shifting drive system indicates a successful gear shifting. If no measure is taken at this point, it may cause damage to a system component and a vehicle breakdown fault. When a synchronizer component is damaged and a gear disengagement occurs, a gearbox may also be damaged if no diagnosis is performed.

### SUMMARY

In view of this, a gear shifting control method and system for a hybrid power system, and an electronic device are provided according to an embodiment of the present invention, so as to improve an accuracy and reliability of detection for gear disengagement fault, and thus reducing damage to a hardware of gearbox caused by the gear disengagement fault.

The technical solutions of the present invention are implemented as follows.

An embodiment of the present invention provides a gear shifting control method for a hybrid power system including: after a vehicle is powered on, continuously acquiring a rotating speed difference of a synchronizer of the hybrid power system; determining whether a duration during which the rotating speed difference of the synchronizer exceeds a preset rotating speed difference threshold is greater than a preset time period; and if the duration during which the rotating speed difference of the synchronizer exceeds the preset rotating speed difference threshold is greater than the preset time period, reporting a gear disengagement fault and performing gear disengagement degradation protection.

In an embodiment, the performing the gear disengagement degradation protection includes: detecting whether the vehicle is enabled to perform full-function driving in a current gear of the hybrid power system; and if does not enable the vehicle is not enabled to perform the full-function driving in the current gear of the hybrid power system, shifting the current gear of the hybrid power system into a gear in which the vehicle is enabled to perform the full-function driving.

In an embodiment, full-function driving includes a continuously variable transmission gear and/or a series gear.

In an embodiment, before the acquiring the rotating speed difference of the synchronizer, the gear shifting control method also includes: detecting a vehicle speed; and determining whether the vehicle speed is within a preset vehicle speed range.

In an embodiment, the performing the gear disengagement degradation protection also includes: reducing a torque of an engine and a torque of a motor of the hybrid power system to be zero; and reducing the vehicle speed to be within the preset vehicle speed range.

In an embodiment, the gear shifting control method also includes: if the duration during which the rotating speed difference of the synchronizer exceeds the preset rotating speed difference threshold is less than the preset time period, or the rotating speed difference of the synchronizer is less than the preset rotating speed difference threshold, operating the hybrid power system normally.

In an embodiment, the acquiring the rotating speed difference of the synchronizer of the hybrid power system includes: acquiring a rotating speed of an engine and a rotating speed of a motor of the hybrid power system; and determining the rotating speed difference of the synchronizer based on the rotating speed of the engine and the rotating speed of the motor.

In an embodiment, the gear shifting control method also includes: recovering from the gear disengagement fault after the vehicle is powered on next time.

The present invention also provides a gear shifting control system including: a vehicle control unit, configured to continuously acquire a rotating speed difference of a synchronizer of the hybrid power system after a vehicle is powered on; a transmission control unit, configured to determine whether a duration during which the rotating speed difference of the synchronizer exceeds a preset rotating speed difference threshold is greater than a preset time period, and report a gear disengagement fault and perform gear disengagement degradation protection in a case that the duration during which the rotating speed difference of the synchronizer exceeds the preset rotating speed difference threshold is greater than the preset time period.

The present invention also provides an electronic device including: a memory configured to store an executable instruction; a processor configured to, when executing the executable instructions stored in the memory, implement the gear shifting control method according to the above solution.

An embodiment of the present invention provides a gear shifting control method for a hybrid power system including: after a vehicle is powered on, continuously acquiring a rotating speed difference of a synchronizer of the hybrid power system; determining whether a duration during which the rotating speed difference of the synchronizer exceeds a preset rotating speed difference threshold is greater than a preset time period; and if the duration during which the rotating speed difference of the synchronizer exceeds the preset rotating speed difference threshold is greater than the preset time period, reporting a gear disengagement fault and performing a gear disengagement degradation protection. In this way, compared with the solution in the related art where a gear shifting drive system performs gear disengagement judgment, according to the embodiment of the present invention, the rotating speed difference of the synchronizer is taken as a condition for gear disengagement judgment, which improves the accuracy and reliability of gear disengagement fault detection. Therefore, damage to the gearbox hardware caused by the gear disengagement fault is reduced. Meanwhile, during the gear disengagement degradation protection of the vehicle, the gear of the vehicle is degraded, and a motor is used for torque fill gear shifting, thereby normal driving of the vehicle is ensured, and thus dangerous conditions such as vehicle breakdown and power loss may be avoided. In addition, according to the present invention, the gear disengagement diagnosis is performed immediately after the vehicle is powered on, ensuring full-range driving of the vehicle.

### BRIEF DESCRIPTION OF THE DRAWINGS

FIG. 1 is a first schematic flow chart of a gear shifting control method according to an embodiment of the present invention.
FIG. 2 is a schematic structural diagram of a gear shifting control system according to an embodiment of the present invention.
FIG. 3 is a second schematic flowchart of a gear shifting control method according to an embodiment of the present invention.
FIG. 4 is a schematic structural diagram of a hybrid power system according to an embodiment of the present invention.
FIG. 5 is a third schematic flowchart of a gear shifting control method according to an embodiment of the present invention.
FIG. 6 is a fourth schematic flowchart of a gear shifting control method according to an embodiment of the present invention.
FIG. 7 is a fifth schematic flowchart of a gear shifting control method according to an embodiment of the present invention.
FIG. 8 is a sixth schematic flowchart of a gear shifting control method according to an embodiment of the present invention.
FIG. 9 is a schematic block diagram of an electronic device according to an embodiment of the present invention.

### DETAILED DESCRIPTION OF THE EMBODIMENTS

In order to make the objectives, technical solutions and advantages of the present invention clearer, the technical solutions of the present invention are further described in detail below with reference to the accompanying drawings and embodiments. The described embodiments should not be regarded as limiting the present invention, and all other embodiments obtained by those skilled in the art without creative efforts shall fall within the protection scope of the present invention.

In the following description, reference to "some embodiments" describes a subset of all possible embodiments. It should be understood that, the "some embodiments" may be the same subset or different subsets of all possible embodiments, and may be combined with one another without conflict.

If similar descriptions of "first/second" appear in the application document, the following explanation is added. In the following description, the terms "first/second/third" are only used for distinguishing similar objects, and do not represent a specific ordering of the objects. It may be understood that, the "first/second/third" may be interchanged in a specific order or sequence where permitted, so that the embodiments of the present invention described herein can be implemented in an order other than that illustrated or described herein.

Unless otherwise defined, all technical and scientific terms used herein have the same meaning as commonly understood by those skilled in the art to which the present invention belongs. The terms used herein are only for the purpose of describing the embodiments of the present invention, and are not intended to limit the present invention.

It should be noted that, in this document, the terms "comprise", "include" or any other variations thereof are intended to cover a non-exclusive inclusion, such that a process, method, article or device that includes a series of elements includes not only those elements, but also other elements not explicitly listed, or elements inherent to such a process, method, article or device. Without further limitations, an element defined by the phrase "comprising a..." does not exclude the presence of additional identical elements in the process, method, article or device that includes the element.

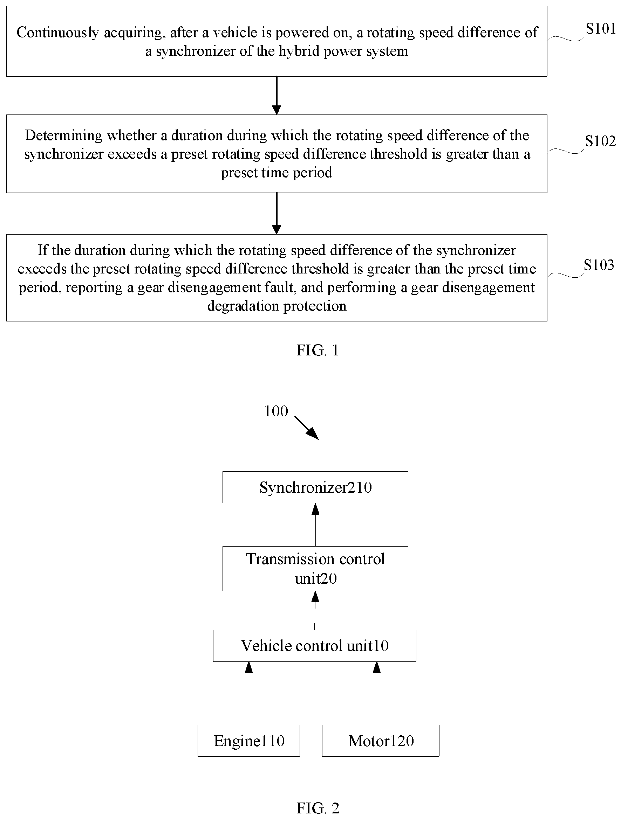

FIG. 1 is a schematic flow chart of a gear shifting control method according to an embodiment of the present invention, and the description of a gear shifting control method for a hybrid power system will be made with reference to the steps shown in FIG. 1.

In step S101, after a vehicle is powered on, a rotating speed difference of a synchronizer of a hybrid power system is continuously acquired.

FIG. 2 is a schematic diagram of a gear shifting control system 100 according to an embodiment of the present invention. It should be noted that the gear shifting control method in the embodiment of the present invention may be implemented by the gear shifting control system 100 shown in FIG. 2.

In the embodiment of the present invention, with reference to FIG. 2, the hybrid power system may include an engine 110 and a motor 120. A synchronizer 210 in a gearbox generally includes a gear hub, a gear sleeve and an engagement gear. The gear hub is a disc-shaped member having an internal spline hole and an external spline shaft, and is connected to a shaft through a spline. The gear sleeve is an annular member having a spline hole, and is connected to an external spline of the gear hub. When a gear shifting is required, the gear sleeve sleeved on the gear hub moves axially, so that the spline hole is simultaneously sleeved on the engagement gear, thereby achieving power connection and transmission. The engine 110 is connected to an engine input shaft of the gearbox, and a rotating speed of the engine 110 is the same as a rotating speed of the gear hub of the synchronizer 210. Therefore, the rotating speed of the gear hub of the synchronizer may be controlled by controlling the rotating speed of the engine 110. The motor 120 is connected to the engagement gear. Therefore, after the vehicle is powered on, the vehicle control unit 10 may detect the rotating speed of the engine 110 and the rotating speed of the motor 120, and then obtain a rotating speed of the gear hub and a rotating speed of the engagement gear according to the rotating speed of the engine 110 and the rotating speed of the motor 120, and further obtain the rotating speed difference of the synchronizer 210. In the present invention, a gear disengagement diagnosis is performed immediately after the vehicle is powered on, thereby ensuring full-range driving of the vehicle, and thus improving safety.

In step S102, it is determined whether a duration during which the rotating speed difference of the synchronizer exceeds a preset rotating speed difference threshold is greater than a preset time period.

In step S103, if the duration during which the rotating speed difference of the synchronizer exceeds the preset rotating speed difference threshold is greater than the preset time period, a gear disengagement fault is reported and a gear disengagement degradation protection is performed.

In the embodiment of the present invention, with reference to FIG. 2, the vehicle control unit 10 may send the acquired rotating speed difference of the synchronizer to a transmission control unit (TCU) 20. The transmission control unit 20 may determine whether the rotating speed difference of the synchronizer 210 exceeds the preset rotating speed difference threshold, and whether the duration during which the rotating speed difference of the synchronizer 210 exceeds the preset rotating speed difference threshold is greater than the preset time period. For example, the preset rotating speed difference threshold is 800 rpm, and the preset time period may be 200 ms. When the rotating speed difference of the synchronizer 210 is greater than 800 rpm and the duration is greater than 200 ms, the transmission control unit 20 may report a gear disengagement fault.

Further, the transmission control unit 20, after detecting the gear disengagement fault, may perform a gear disengagement degradation protection on the gearbox. For example, the transmission control unit 20, after detecting the gear disengagement fault, may perform a gear degradation on the hybrid power system, and switch the gear of the hybrid power system to an electronic continuously variable transmission (ECVT) gear, and the vehicle control unit 10 reduces torques of the engine and the motor to be 0. A degradation mode for the gear disengagement degradation protection may be divided into two steps. In a first step, the torques of the engine and generator are limited to prevent power transmission from damaging the gearbox. In a second step, a torque fill gear shifting is performed to shift into an adjacent continuously variable transmission gear. After the gear shifting is completed, the torque of the engine is restored to ensure the normal operation of the vehicle.

It may be understood that, in the embodiment of the present invention, whether the gear shifting of the hybrid power system is successful is determined by determining whether the rotating speed difference of the synchronizer exceeds the preset threshold and the duration during which the rotating speed difference of the synchronizer exceeds the preset threshold. In this way, compared with the related art where a gear shifting drive system is used for determining the gear disengagement fault, in the embodiment of the present invention, the rotating speed difference of the synchronizer is taken as the condition for determining the gear disengagement, which is capable of improving accuracy and reliability of a gear disengagement fault detection. Therefore, damage to the gearbox hardware caused by the gear disengagement fault may be reduced.

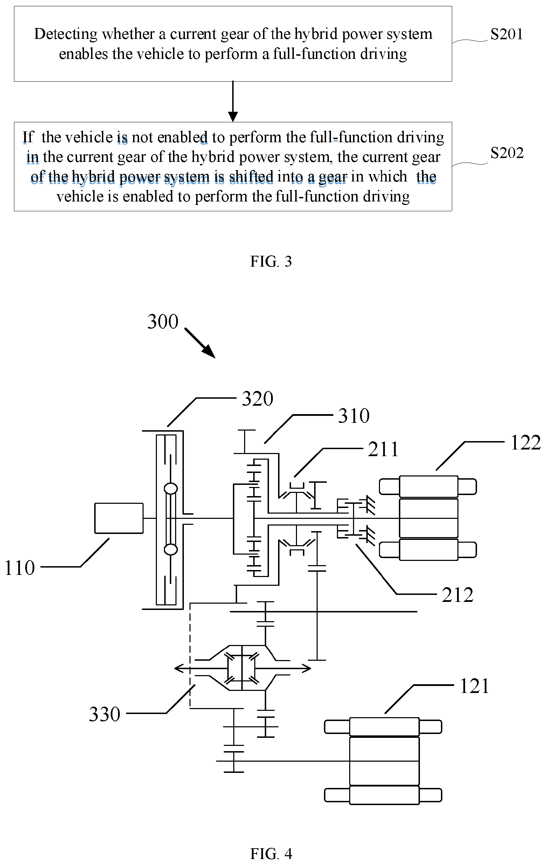

In some embodiments of the present invention, the gear shifting control method may be further implemented through steps S201 to S202 shown in FIG. 3, and the description will be made with reference to each step shown in FIG. 3.

In step S201, it is detected whether a current gear of the hybrid power system enables the vehicle to perform a full-function driving.

FIG. 4 is a schematic structural diagram of a hybrid power system 300 according to an embodiment of the present invention. It should be noted that the hybrid power system 300 includes a planetary gear set 310, two synchronizers 211, 212, two motors 121, 122, a differential 330, a torsional vibration damper 320, and an engine 110. That is, the synchronizer 210 in FIG. 1 is illustrated by the synchronizers 211, 212 in FIG. 4, and the motor 120 in FIG. 1 is illustrated by the motors 121, 122 for synchronizer in FIG. 4. In the embodiment of the present invention, the hybrid power system 300 in FIG. 4 is taken as an example, and the hybrid power system 300 may also have other structures, which are not limited herein.

In the embodiment of the present invention, with reference to FIG. 4, the motor 121 may be a driving motor which is capable of performing driving assistance and braking energy recovery. The motor 122 may be a generator which is capable of generating electricity, providing assistance and performing braking energy recovery. The two synchronizers 211, 212, through different engagements, may enable the hybrid power system 300 to realize 8 gears. States of the synchronizers corresponding to different gears are shown in Table 1.

**Table 1**

| Gear | Synchronizer 211 | | | Synchronizer 212 | | |
|---|---|---|---|---|---|---|
| | S1L | S1 Middle | S1R | S2L | S2 Middle | S2R |
| Engine 1st gear | - | - | √ | √ | - | - |
| Engine 2nd gear | - | - | √ | - | - | √ |
| Engine 3rd gear | √ | - | - | √ | - | - |
| Engine 4th gear | √ | - | - | - | - | √ |
| Series gear | - | √ | - | √ | - | |
| EV gear | - | √ | - | - | √ | - |
| ECVT1 | - | - | √ | - | √ | - |
| ECVT2 | √ | - | - | - | √ | - |

In the table 1, "S1L", "S1 Middle" and "S1R" indicate different engagement positions of the synchronizer 211, and "S2L", "S2 Middle" and "S2R" indicate different engagement positions of the synchronizer 212. "√" indicates that a corresponding position of the synchronizer is in an engaged state, and "-" indicates that a corresponding position of the synchronizer is in a disengaged state. ECVT1 and ECVT2 are both continuously variable transmission gears, and the EV gear is a pure electric drive gear. In a case that the engine 110 and the motor 120 are driven in parallel, the engagement positions of the synchronizers 121, 122 may be the same as those of the corresponding engine gears.

It should also be noted that, full-function driving refers to that the vehicle is capable of performing parking power generation, starting, braking energy recovery, driving assistance and normal driving working conditions. In the hybrid power system 300 shown in FIG. 4, the motor 121 is coupled with the differential 330, so that the braking energy recovery and driving assistance may be performed in all 8 driving modes. The series mode in the table 1 is a range-extended mode, which may realize the working conditions of parking power generation, starting and normal driving. In both the continuously variable transmission gears ECVT1 and ECVT2, the working conditions of parking power generation, starting and normal driving may be realized.

In the embodiment of the present invention, with reference to FIG. 2 and FIG. 4, the transmission control unit 20 may detect whether the vehicle is enabled to perform the full-function driving in the current gear of the hybrid power system 300. For example, when the gear of the hybrid power system 300 is in the series mode or the continuously variable transmission gear, the vehicle may perform the full-function driving. In a case that the gear of the hybrid power system 300 is in the continuously variable transmission gear ECVT1, the hybrid power system 300 may use the motor 121 to make the vehicle start smoothly. When the vehicle continues driving at a low speed, the motor 121 may simultaneously generate power. When the vehicle is in a parking power generation state, the engine 110 drives and simultaneously drives the motor 121 to generate power.

In S202, if the vehicle is not enabled to perform the full-function driving in the current gear of the hybrid power system, the current gear of the hybrid power system is shifted into a gear that the vehicle is enabled to perform the full-function driving.

In the embodiment of the present invention, with reference to FIG. 2, after the gear disengagement fault is detected, in order to maintain the driving of the whole vehicle, the gear of the vehicle needs to ensure that the vehicle may perform the full-function driving. When the transmission control unit 20 detects that the vehicle is not enabled to perform the full-function driving in the current gear of the hybrid power system 300, the transmission control unit 20 shifts the current gear of the hybrid power system 300 into a gear that the vehicle is enabled to perform the full-function driving. For example, if the current gear of the hybrid power system 300 is the engine 1st gear, the transmission control unit 20 needs to maintain an engagement position of the synchronizer 211, and adjust an engagement position of the synchronizer 212 from "S2L" to "S2 Middle", so as to adjust the hybrid power system 300 from the engine 1st gear to the continuously variable transmission gear ECVT1. Correspondingly, if the vehicle is not enabled to perform the full-function driving in the current gear of the hybrid power system, the hybrid power system maintains the current gear. In this way, after a gear disengagement fault occurs in the vehicle, it is ensured that the vehicle is enabled to perform the full-function driving in the current gear of the vehicle. Therefore, dangerous situations such as vehicle breakdown and power loss may be avoided.

It should be noted that, during the process that the transmission control unit 20 controls the gear to shift into the continuously variable transmission gear, the gear may be changed to the nearest one. For example, during the process of shifting the hybrid power system 300 from the engine 1st gear to the continuously variable transmission gear, compared with shifting into the continuously variable transmission gear ECVT2, shifting into the continuously variable transmission gear ECVT1 only needs to adjust the engagement position of the synchronizer 212. Therefore, the transmission control unit 20 may shift the hybrid power system 300 from the engine 1st gear into the continuously variable transmission gear ECVT1 in the nearest position. In this way, a time of gear shifting is further reduced.

In some embodiments of the present invention, the gears for the full-function driving includes: a continuously variable transmission gear and/or a series gear.

In the embodiment of the present invention, with reference to the table 1 and FIG. 3, the hybrid power system 300 may be a dual-motor single-planetary-row multi-gear hybrid transmission. In this way, the gears of the hybrid power system 300 that are capable of performing the full-function driving may include the continuously variable transmission gear ECVT1, the continuously variable transmission gear ECVT2, and the series gear.

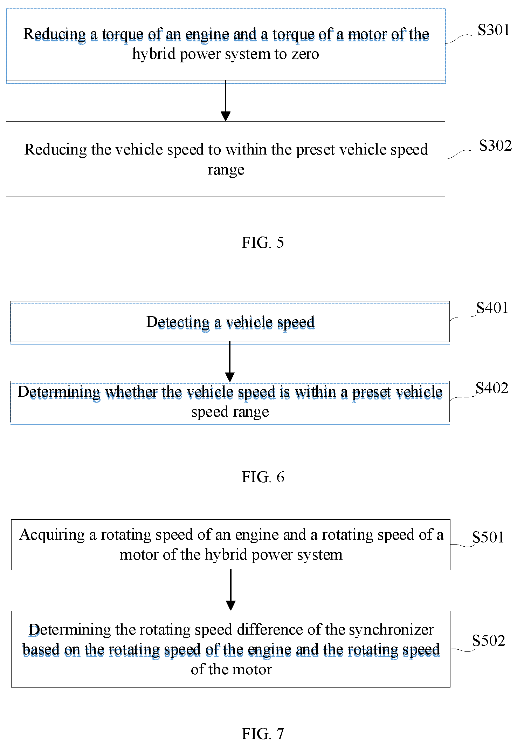

In some embodiments of the present invention, the gear shifting control method may be further implemented through steps S301 to S302 shown in FIG. 5, and the description will be made with reference to each step shown in FIG. 5.

In step S301, a torque of an engine and a torque of a motor of the hybrid power system are reduced to be zero.

In step S302, the vehicle speed is reduced to be within the preset vehicle speed range.

In the embodiment of the present invention, with reference to FIG. 2 and FIG. 4, after the gear of the hybrid power system 300 is shifted into a gear that the vehicle is capable of performing the full-function driving, the vehicle control unit 10 needs to reduce the torques of the engine 110 and the motor 120 to be zero. For example, after the gear of the hybrid power system 300 is shifted into the continuously variable transmission gear ECVT1, the torque of the engine 110 and the torque of the motor 122 serving as a generator need to be reduced to be zero. Then, the vehicle control unit 10 needs to reduce the vehicle speed to be within the preset vehicle speed range. Then, the vehicle control unit 10 controls the engine and the generator to restore the torques to ensure the normal operation of the vehicle.

In some embodiments of the present invention, before the rotating speed difference of the synchronizer is acquired, the gear shifting control method may be further implemented through steps S401 to S402 shown in FIG. 6, and the description will be made with reference to each step shown in FIG. 6.

In step S401, a vehicle speed is detected.

In step S402, it is determined whether the vehicle speed is within a preset vehicle speed range.

In the embodiment of the present invention, with reference to FIG. 2, when the vehicle is in other working conditions (for example, the parking power generation conditions), the hybrid power system 300 may also have a situation where a rotating speed difference of a clutch exceeds a preset rotating speed difference threshold, and there are different gear disengagement degradation protection measures. Therefore, in the embodiment of the present invention, before the rotating speed difference of the synchronizer 210 is acquired, the vehicle control unit 10 needs to determine the current working condition of the vehicle. Therefore, different gear disengagement degradation protection measures are adopted. For example, the vehicle control unit 10 may detect the vehicle speed and determine whether the vehicle speed is within the preset vehicle speed range. The preset vehicle speed range ranges from 0 to 8 km/h. When the vehicle speed is 0, it may be determined that the vehicle is in the parking power generation working condition. At this time, if the rotating speed difference of the clutch exceeds the preset rotating speed difference threshold, the torques of the engine 110 and the motor 121 serving as the generator may be directly reduced to be zero, without adjusting the gear of the hybrid power system 300 and reducing the vehicle speed. If the vehicle speed is greater than 8 km/h, it is determined that the vehicle is driving normally. At this time, if the rotating speed difference of the clutch exceeds the preset rotating speed difference threshold, it is necessary to adjust the gear of the hybrid power system 300 to the continuously variable transmission gear, and then subsequent operations of limiting the torque and the vehicle speed are performed.

In some embodiments of the present invention, after steps S101 to S102 in FIG. 1 are completed, the gear shifting control method may be further implemented through step S104, and the description will be made with reference to each step.

In step S104, if the duration during which the rotating speed difference of the synchronizer exceeds the preset rotating speed difference threshold is less than the preset time period, or the rotating speed difference of the synchronizer is less than the preset rotating speed difference threshold, the hybrid power system is operated normally.

In the embodiment of the present invention, with reference to FIG. 2 and FIG. 4, if the duration during which the rotating speed difference of the synchronizer 210 exceeds the preset rotating speed difference threshold is less than the preset time period, or the rotating speed difference of the synchronizer is less than the preset rotating speed difference threshold, the hybrid power system 300 is operated normally. For example, when the vehicle speed is 0, it may be determined that the vehicle is in the parking power generation working condition. At this time, if the rotating speed difference of the clutch is less than the preset rotating speed difference threshold, the hybrid power system 300 may perform a parking power generation normally. If the vehicle speed is greater than 8 km/h, it is determined that the vehicle is driving normally. At this time, if the rotating speed difference of clutch is less than the preset rotating speed difference threshold, it indicates that the gear shifting is successful, and the vehicle may continue to drive normally.

In some embodiments of the present invention, S101 shown in FIG. 1 may be further implemented through steps S501 to S502 shown in FIG. 7, and the description will be made with reference to each step shown in FIG. 7.

In step S501, a rotating speed of an engine and a rotating speed of a motor of the hybrid power system are acquired.

In step S502, the rotating speed difference of the synchronizer is determined based on the rotating speed of the engine and the rotating speed of the motor.

In the embodiment of the present invention, with reference to FIG. 2 and FIG. 4, during a gear shifting process of the hybrid power system 300, the vehicle control unit 10 may continuously acquire the rotating speed of the engine and the rotating speed of driving motor of the hybrid power system. Therefore, a rotating speed of the gear hub and a rotating speed of the engagement gear of the synchronizer 210 are calculated according to the rotating speed of the engine and the rotating speed of the motor, so as to obtain the rotating speed difference of the synchronizer. For example, when the hybrid power system 300 is in the engine-driven 1st gear with the motor 121 drives the vehicle in parallel, a power output by the motor 121 is transmitted to a driven gear of the differential 330, and after being coupled with the power output by the engine 110, the power is transmitted through the differential 330 to wheels via half shafts. The vehicle control unit 10 may monitor the rotating speed of the engine 110 and the rotating speed of the motor 121 to confirm the rotating speed difference of the synchronizer 211. Therefore, in subsequent steps, according to the embodiment of the present invention, it may be determined whether the hybrid power system 300 is in gear disengagement according to the rotating speed difference of the synchronizer.

In some embodiments of the present invention, after steps S101 to S103 in FIG. 1 are completed, the gear shifting control method may be further implemented through S105, and the description will be made with reference to each step.

In step S105, it is recovered from the gear disengagement fault after the vehicle is powered on next time.

In the embodiment of the present invention, with reference to FIG. 2, after the transmission control unit 20 reports the gear disengagement fault, the vehicle control unit 10 will control the vehicle according to the gear disengagement fault. After the vehicle is powered on next time, the vehicle control unit 10 may clear the gear disengagement fault and control the vehicle in accordance with a normal operation of the vehicle. That is, the vehicle may be recovered from the gear disengagement fault in a next power-on/power-off cycle. Therefore, while the hardware of gearbox is protected to the maximum extent, the gear disengagement fault is capable of being quickly cleared to avoid affecting the normal driving function of the vehicle.

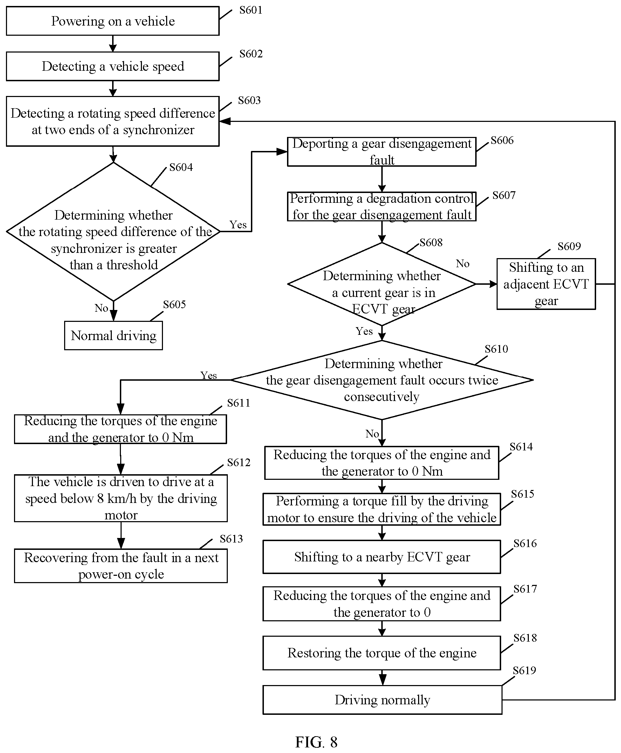

FIG. 8 is a schematic flow chart of another gear shifting control method for a hybrid power system according to an embodiment of the present invention. The gear shifting control method for the hybrid power system may be implemented through steps S601 to S614 shown in FIG. 8, and the description will be made with reference to each step.

In step S601, a vehicle is powered on.

In step S602, a vehicle speed is detected.

In the embodiment of the present invention, with reference to FIG. 2, when the vehicle is in other working conditions (for example, the parking power generation working condition), the hybrid power system 300 may also experience a situation where a rotating speed difference of a clutch exceeds a preset rotating speed difference threshold, and there are different gear disengagement degradation protection measures. For example, when the vehicle speed is 0, it may be determined that the vehicle is in the parking power generation working condition. At this time, if the rotating speed difference of the clutch exceeds the preset rotating speed difference threshold, the torques of the engine 110 and the motor 121 serving as the generator may be directly reduced to be zero, without adjusting the gear of the hybrid power system 300 and reducing the vehicle speed. Therefore, in the embodiment of the present invention, before the rotating speed difference of the synchronizer 210 is acquired, the vehicle control unit 10 needs to determine the current working condition of the vehicle.

In step S603, a rotating speed difference at two ends of a synchronizer is detected.

In step S604, whether the rotating speed difference of the synchronizer is greater than a threshold is determined.

In step S605, the vehicle is driven normally.

In step S606, a gear disengagement fault is reported.

In step S607, a degradation control for the gear disengagement fault is performed.

In the embodiment of the present invention, with reference to FIG. 2 and FIG. 4, if the vehicle speed is greater than 8 km/h, it is determined that the vehicle is driving normally. At this time, if the rotating speed difference of the clutch is less than the preset rotating speed difference threshold, it indicates that the gear shifting is successful, and the vehicle may continue to drive normally. At this time, if the rotating speed difference of the clutch is greater than the preset rotating speed difference threshold and the duration is greater than the preset time period, it indicates that the gear shifting fails, and the transmission control unit 20 may report a gear disengagement fault and perform a degradation control for the gear disengagement fault.

In step S608, whether a current gear is in ECVT gear determined.

In step S609, a gear is shifted into an adjacent ECVT gear.

In step S610, whether the gear disengagement fault occurs twice consecutively is determined.

In the embodiment of the present invention, with reference to FIG. 2 and FIG. 4, when the gear disengagement fault occurs in the vehicle, the gear of the vehicle needs to be shifted into a ECVT gear to ensure that the vehicle is enabled to perform the full-function driving in the current gear of the vehicle. Gears of the full-function driving shown in FIG. 4 include the continuously variable transmission gears ECVT1 and ECVT2. Therefore, when the vehicle shifts to the continuously variable transmission gear, if one of the continuously variable transmission gears ECVT1 and ECVT2 is damaged, the vehicle may shift into the other undamaged gear.

In step S611, the torques of the engine and the generator is reduced to be 0 Nm.

In step S612, the vehicle is driven to drive at a speed below 8 km/h by the driving motor.

In the embodiment of the present invention, with reference to FIG. 2 and FIG. 4, if both the continuously variable transmission gears ECVT1 and ECVT2 of the vehicle are damaged, the vehicle does not enable to perform the full-function driving. At this time, the vehicle is only capable of being driven by the driving motor. Meanwhile, after the gear disengagement fault occurs in the hybrid power system 300, the vehicle speed and torque are reduced. Therefore, the damage to the gearbox hardware caused by the gear disengagement fault is capable of being reduced. Meanwhile, the vehicle speed is maintained within the preset vehicle speed range, which enables the vehicle to limp for emergency handling such as emergency vehicle moving.

In step S613, the vehicle is recovered from the fault in a next power-on cycle.

In the embodiment of the present invention, after the vehicle is powered on next time, the vehicle control unit 10 may clear the gear disengagement fault. That is, a validity period of the gear disengagement fault reported by the vehicle control unit 10 is one power-on/power-off cycle. Therefore, while the protection of transmission hardware is maximized, the gear disengagement fault is capable of being quickly cleared to avoid affecting the normal driving function of the vehicle.

In step S614, reducing the torques of the engine and the generator is reduced to be 0 Nm.

In the embodiment of the present invention, with reference to FIG. 2 and FIG. 4, when starting to shift into the continuously variable transmission gear, the torques of the engine 110 and the motor 121 serving as a generator may be limited to prevent power transmission from damaging the transmission.

In step S615, a torque filling by the driving motor is performed to ensure the driving of the vehicle.

In the embodiment of the present invention, with reference to FIG. 2 and FIG. 4, during the gear disengagement degradation protection of the vehicle, the motor 122 is used as a driving motor to perform the torque fill gear shifting, to ensure the normal driving of the vehicle, and thus avoiding dangerous conditions such as vehicle breakdown and power loss.

In step S616, the gear is shifted into a nearby ECVT gear.

In step S617, the torques of the engine and the generator are reduced to be 0.

In step S618, the torque of the engine is restored.

In step S619, the vehicle is driven normally.

In the embodiment of the present invention, with reference to FIG. 2 and FIG. 4, if at least one of the continuously variable transmission gears ECVT1 and ECVT2 of the vehicle is not damaged, the vehicle may switch into one of the gears in which the vehicle is enabled to perform the full-function driving. After the vehicle switches to the continuously variable transmission gear, the torque of the engine is restored to ensure the normal operation of the vehicle. During the normal driving of the vehicle, the rotating speed difference of clutch may be continuously detected.

In some embodiments of the present invention, with reference to FIG. 2, the gear shifting control system 100 includes a vehicle control unit 10 and a transmission control unit 20. The vehicle control unit 10 is configured to, after a vehicle is powered on, continuously acquire a rotating speed difference of the synchronizer 210. The transmission control unit 20 is configured to determine whether a duration during which the rotating speed difference of the synchronizer exceeds a preset rotating speed difference threshold is greater than a preset time period, and report a gear disengagement fault and perform a gear disengagement degradation protection in a case that the duration during which the rotating speed difference of the synchronizer 210 exceeds the preset rotating speed difference threshold is greater than the preset time period.

In the embodiment of the present invention, with reference to FIG. 2 and FIG. 4, the transmission control unit 20 may determine whether the gear shifting of the hybrid power system 300 is successful by determining whether the rotating speed difference of the synchronizer exceeds a preset threshold and the duration during which the rotating speed difference of the synchronizer exceeds the preset threshold. In this way, an accuracy and reliability of gear disengagement fault detection are improved. Therefore, damage to the gearbox hardware caused by the gear disengagement fault is reduced.

In some embodiments of the present invention, with reference to FIG. 2, the vehicle control unit is further configured to detect whether the vehicle is enabled to perform a full-function driving in a current gear of the hybrid power system, if the vehicle is not enabled to perform the full-function driving in the current gear of the hybrid power system, control the current gear of the hybrid power system to be shifted into a gear in which the vehicle is enabled to perform the full-function driving, or if the vehicle is enabled to perform the full-function driving in the current gear of the hybrid power system, make the hybrid power system maintain the current gear.

In some embodiments of the present invention, with reference to FIG. 2, the vehicle control unit is further configured to reduce a torque of an engine and a torque of a driving motor of the hybrid power system to be zero, and reduce a vehicle speed to be within a preset vehicle speed range.

In some embodiments of the present invention, with reference to FIG. 2, the vehicle control unit 10 is further configured to detect a vehicle speed and determine whether the vehicle speed is within a preset vehicle speed range.

In some embodiments of the present invention, with reference to FIG. 2, the transmission control unit 20 is further configured to operate the hybrid power system normally if the duration during which the rotating speed difference of the synchronizer 210 exceeds the preset rotating speed difference threshold is less than the preset time period, or the rotating speed difference of the synchronizer 210 is less than the preset rotating speed difference threshold.

In some embodiments of the present invention, with reference to FIG. 2, the vehicle control unit 10 is further configured to acquire a rotating speed of an engine and a rotating speed of a driving motor of the hybrid power system, and acquire a rotating speed of the gear hub and a rotating speed of an engagement of the synchronizer 210 based on the rotating speed of the engine and the rotating speed of the driving motor; and determine the rotating speed difference of the synchronizer 210 based on the rotating speed of the gear hub and the rotating speed of the engagement gear of the synchronizer 210.

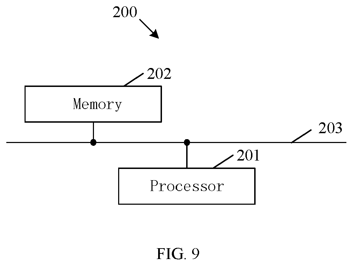

FIG. 9 is a schematic block diagram of an electronic device 200 according to an embodiment of the present invention. With reference to FIG. 9, hardware entities of the electronic device 200 include a processor 201, a memory 202 and a communication interface 203. The processor 201 generally controls an overall operation of the electronic device 200. The communication interface 203 may enable the electronic device 200 to communicate with other devices or apparatuses over a network. The memory 202 is configured to store instructions and applications executable by the processor 201, and may also cache data (for example, image data, audio data, voice communication data, and video communication data) to be processed or already processed by the processor 201 and various modules in the electronic device 200, which may be implemented by a flash memory or a random access memory (RAM). The processor 201 is configured to, when executing the executable instructions stored in the memory 202, implement the gear shifting control method for the hybrid power system according to the above embodiments.

The serial numbers of the above embodiments of the present invention are for description purposes only, and do not represent the advantages and disadvantages of the embodiments. The methods disclosed in several method embodiments provided in the present invention may be combined arbitrarily without conflict to obtain new method embodiments. The features disclosed in several product embodiments provided in the present invention may be combined arbitrarily without conflict to obtain new product embodiments. The features disclosed in several method or device embodiments provided in the present invention may be combined arbitrarily without conflict to obtain new method embodiments or device embodiments, respectively.

The above description is only specific embodiments of the present invention, but the protection scope of the present invention is not limited thereto. Any changes or substitutions that may be readily conceived by any person skilled in the art within the technical scope disclosed in the present invention shall be encompassed within the protection scope of the present invention. Therefore, the protection scope of the present invention shall be subject to the protection scope of the claims.

## Claims

1. A gear shifting control method for a hybrid power system, comprising:
continuously acquiring, after a vehicle is powered on, a rotating speed difference of a synchronizer of the hybrid power system;
determining whether a duration during which the rotating speed difference of the synchronizer exceeds a preset rotating speed difference threshold is greater than a preset time period; and
reporting, if the duration during which the rotating speed difference of the synchronizer exceeds the preset rotating speed difference threshold is greater than the preset time period, a gear disengagement fault, and performing a gear disengagement degradation protection.

2. The gear shifting control method according to claim 1, wherein the performing the gear disengagement degradation protection comprises:
detecting whether the vehicle is enabled to perform a full-function driving in a current gear of the hybrid power system;
shifting, if the vehicle is not enabled to perform the full-function driving in the current gear of the hybrid power system, the current gear of the hybrid power system into a gear in which the vehicle is enabled to perform the full-function driving.

3. The gear shifting control method according to claim 2, wherein the full-function driving comprises: a continuously variable transmission gear and/or a series gear.

4. The gear shifting control method according to claim 2, wherein the gear shifting control method, before the acquiring the rotating speed difference of the synchronizer, further comprises:
detecting a vehicle speed; and
determining whether the vehicle speed is within a preset vehicle speed range.

5. The gear shifting control method according to claim 4, wherein the performing the gear disengagement degradation protection further comprises:
reducing a torque of an engine and a torque of a motor of the hybrid power system to be zero; and
reducing the vehicle speed to be within the preset vehicle speed range.

6. The gear shifting control method according to claim 1, further comprising:
operating the hybrid power system normally, if the duration during which the rotating speed difference of the synchronizer exceeds the preset rotating speed difference threshold is less than the preset time period, or the rotating speed difference of the synchronizer is less than the preset rotating speed difference threshold.

7. The gear shifting control method according to claim 1, wherein the acquiring the rotating speed difference of the synchronizer of the hybrid power system comprises:
acquiring a rotating speed of an engine and a rotating speed of a motor of the hybrid power system; and
determining the rotating speed difference of the synchronizer based on the rotating speed of the engine and the rotating speed of the motor.

8. The gear shifting control method according to claim 1, further comprising:
recovering from the gear disengagement fault after the vehicle is powered on next time.

9. A gear shifting control system, comprising:
a vehicle control unit, configured to continuously acquire, after a vehicle is powered on, a rotating speed difference of a synchronizer of a hybrid power system;
a transmission control unit, configured to determine whether a duration during which the rotating speed difference of the synchronizer exceeds a preset rotating speed difference threshold is greater than a preset time period, report, in a case that the duration during which the rotating speed difference of the synchronizer exceeds the preset rotating speed difference threshold is greater than the preset time period, a gear disengagement fault, and perform a gear disengagement degradation protection.

10. An electronic device, comprising:
a memory, configured to store an executable instruction; and
a processor, configured to, when executing the executable instruction stored in the memory, implement the gear shifting control method according to any one of claims 1 to 8.
